# EUROPEAN PATENT SPECIFICATION

(11) **EP 3 468 517 B1**
(45) Date of publication and mention of the grant of the patent: **30.12.2020**
(21) Application number: 17729897.3
(22) Date of filing: 16.06.2017
(51) Int. Cl.: A61G 5/10, A61G 5/12, B60N 2/28, A61G 13/12

(54) **SIDE SUPPORT FOR A POSTURAL SUPPORT SEAT**
SEITENHALTER FÜR EINE HALTUNGSSITZSTÜTZE
SUPPORT LATÉRAL POUR UN SIÈGE DE SOUTIEN POSTURAL

(30) Priority: 17.06.2016 EP 16175043
(43) Date of publication of application: 17.04.2019
(73) Proprietor: Sunrise Medical GmbH, 69254 Malsch/Heidelberg (DE)
(72) Inventor: DAVIES, David, Telford Shropshire TF2 9NQ (GB)
(74) Representative: Holzwarth-Rochford, Andreas
(86) International application number: PCT/EP2017/064810
(87) International publication number: WO 2017/216363

(56) References cited:
- WO-A1-2015/174855
- US-A- 3 829 159
- US-A1- 2011 265 262

## Description

The present invention relates to a side support for a postural support seat. The present invention also relates to a postural support seat having at least one side support installed.

Postural support seating is a term often used to refer to pediatric seating which comprises a wide variety of positioning and supportive furniture for infants, children, and adolescents with special needs. However, this kind of furniture can be also used for adults that may have special seating requirements. Postural support seats are known in form of wheelchairs, therapy chairs, positioning strollers, car seating systems, etc. Depending on the type and degree of impairment of the person using the seat, the seating requirements can be very complex.

Furthermore from the state of the art emergency cots with adjustable extremity support means are known as for example disclosed in US 2011/265262 A1.

A seat having an adjustable torso support is furthermore known for example from WO 2015/174855 A1.

The prior art teaches various postural support seats having support elements attached at various positions at the postural support seat. In particular, pelvic and lateral supports such as hip and thigh guides have been proven to be of great importance for providing stability. The support elements are normally mounted to the seat/back section of the seat with bent metal brackets. These brackets are normally adjustable in only one axis, sometimes in even two axis. The brackets can have some 'play' built into them to allow a small amount of angular adjustment. Normally, the brackets are fixed in a set depth position of the seat/back section, and are mounted in slots to allow depth adjustment. When the elements are set at their widest position, the metal brackets usually stick out to the side.

For example, EP 1 374 819 A1 describes a seating arrangement with both lateral and pelvic supports being moveable in two axis.

The pelvic and lateral support elements that are known in the prior art, however, have a limited range that does not allow a high degree of positioning. Also the side supports take up considerable space on the seat/back section of the seat.

Therefore, there is need for improved side supports that can be used on a postural support seat as lateral and/or pelvic side supports, that are more adjustable, and that take up less space.

This need is achieved according to the invention by a side support for a postural support seat according to claim 1.

Said side support comprises at least one support element for exerting a force on a user sitting in the postural support seat; at least a first hinge element and at least a second hinge element forming a joint-link chain, wherein the support element is attached to a first end of the joint-link-chain; and at least one attachment element, wherein a second end of the joint-link-chain, being opposite to the first end is connected to the attachment element, and wherein the attachment element is adapted to be connected to the postural support seat.

Furthermore it is proposed that the second hinge element is connected to the support element and/or the first hinge element is connected to the attachment element, the first hinge element and/or the second hinge element comprise(s) an essentially elongated shape, and/or comprise(s) at least two attachment points at opposite ends and/or the support element is at least partly formed and/or comprised by the second hinge element and/or the attachment element is at least partly formed and/or comprised by the first hinge element.

With the invention it is furthermore proposed that the side support comprises at least one locking pin, and/or the attachment points comprise at least one through hole, preferably at least one, especially each, being suitable for inserting the locking pin for coupling two neighboring first and/or second hinge elements to each other for forming the joint-link chain, wherein especially the two neighboring first and/or second hinge elements are being at least in part rotational about the locking pin.

A side support according to the invention may be furthermore characterized in that the through holes are located in respective recesses in the surface of the first hinge element and/or second hinge element, especially so that two neighboring first and/or second hinge elements are aligned with each other, preferably wherein the recesses are located on the same side of the first and/or second hinge elements, or on opposite sides of the first and/or second hinge elements.

Further advantageous embodiments of the invention can be characterized in that the locking pin and/or the through hole and/or through holes is/are adapted to form a friction joint, wherein preferably the outside of the locking pin and/or the inside of the through holes each comprise threads.

With the invention it is furthermore proposed that at least one castellation element is arranged around the through hole, especially each through hole, and/or the locking pin and/or at a location where two neighboring first and/or second hinge elements are contacting each other, wherein preferably the castellation element of the first or second hinge element is adapted to interact with a castellation element of the neighboring first and/or second hinge element, and wherein especially the locking pin is kept biased by spring means for keeping the castellation elements in engagement, preferably wherein the two neighboring first and/or second hinge elements are adapted so that pulling the two neighboring first and/or second hinge elements away from each other disengages the engagement between the hinge elements.

A side support according the invention may be further characterized by at least one serration element which is arranged around the through hole, especially each through hole and/or the locking pin, and/or at a location where two neighboring first and/or second hinge elements are contacting each other, wherein preferably the serration element of the first or second hinge element is adapted to interact with the serration element of the neighboring first and/or second hinge element, and wherein especially the locking pin is kept biased by the spring means for keeping the serration elements in engagement, and/or the locking pin comprises a thumb screw for keeping the serration elements and/or the castellation elements of the hinge elements in engagement.

Further advantageous embodiments of the invention can be characterized in that the support element comprises at least one connection element for attaching the support element to the first end of the joint-link-chain, especially the second hinge element, wherein preferably the connection element comprises a hinge coupling for rotationally attaching the support element to the second hinge element in the joint-link-chain, wherein especially the hinge coupling is adapted to allow vertical and/or horizontal rotation of the support element relative to the joint-link-chain.

A support element according the invention may be characterized in that the attachment element is essentially elongated, especially comprises at least one continuous groove running in its longitudinal direction, preferably the attachment element comprises two continuous grooves on opposite sides of the attachment element, for installing the attachment element in a rail section that is arranged on a side of a seat section and/or back section of the postural support seat, preferably the attachment element is adapted to be slidably installed in the rail section.

However, a support element according the invention may be also characterized in that the attachment element is essentially elongated, especially comprises at least one bracket with at least one continuous protrusion running in its longitudinal direction, preferably the attachment element comprises two continuous protrusions on opposite sides of the attachment element, for installing the attachment element in the rail section that is arranged on the side of the seat section and/or back section of the postural support seat, preferably the attachment element is adapted to be slidably installed in the rail section.

A side support according the invention can be further characterized in that the support element comprises at least one pad for contacting the user's body.

Further, a side support according the invention can be further characterized in that the joint-link chain is comprised of at least a third hinge element located between two first and/or second hinge elements, preferably a plurality of third hinge elements.

Also, a side support according to the invention can be further characterized in that the first hinge element, the second hinge element and/or the third hinge element comprise(s) at least partly at least one plastic material, and/or at least one cast aluminum material.

Furthermore the invention provides a postural support seat, comprising at least one rail section arranged along the seat section and/or the back section, and at least one side support according to the invention, wherein especially the side support is installed in the rail section.

In one embodiment the postural support seat is characterized in that first and second rail sections are arranged along the side of the seat section, wherein preferably at least two side supports are installed as pelvic supports in each of the first and second rail sections; and/or third and fourth rail sections are arranged along the side of the back section, wherein especially at least one side support is installed as lateral support in each of the third and fourth rail sections.

Thus the invention is based on the surprising finding that by providing hinge elements forming a joint-link chain for holding a support element, it is possible to provide more accurate support for a user sitting in a postural support seat where the support element is mounted to. Also, because the joint-link-chain is comprised of individual hinge elements, the side support is more adjustable and takes up less space. In particular, the side supports do not stick outside of the seat envelope. Also, by using a side support according to the invention, space on the seat section is freed up for other things, like support cushions or control elements which is important when used on small pediatric seats. Therefore, the side supports are especially suitable for use on pediatric seats. Installing the side support in a rail section that is arranged on a side of a seat section and/or back section of the postural support seat, allows the side support to be positioned in three axis (height, width, and depth).

Also, advantageously, the number and orientation of the hinge elements can be varied as required so more adjustment range is possible than with the solutions that are known from the prior art.

According to the invention castellation elements and/or serration elements are used around each through hole of the hinge elements, together with a spring biased locking pin for keeping the castellation elements and/or serration elements of two neighboring hinge elements in engagement, the two hinge elements can be pulled away from each other to disengage the castellations and/or serrations. This advantageously allows the hinge elements to be unlocked for rotating the two hinge elements relative to each other to a new position, where the two hinge elements can be re-engaged again. This avoids the need for tools and allows quick adjustment. Also, one of the hinge elements at the attachment element can be disengaged so that the support element can be swung away from the user to allow them to be transferred out of the seat. In contrast to swing away laterals, that are already known in the prior art, the above solution requires no additional parts to achieve this function.

When serration elements and/or castellation elements are located around each through hole of the hinge elements, a 'non-slip' engagement between two neighboring hinge elements can be achieved with much lower fastener torque.

Further advantages and features of the invention are presented in the following description in which a preferred embodiment of the invention is shown by the help of the enclosed figures, in which
- Figure 1a, 1b, 1c: is a side view, a perspective view, and a front view of a postural support seat, having prior art side supports mounted thereon;
- Figure 2: is a perspective view of a postural support seat, having side supports according to various embodiments of the invention mounted thereon;
- Figure 3: is a perspective view of a side support according to a first embodiment of the invention, where arrows indicate the various degrees of freedom of the side support;
- Figure 4: is a perspective view of a side support according to a second embodiment of the invention;
- Figure 5: is a perspective view of another side support according to a first embodiment of the invention;
- Figure 6a, 6b, 6c: is a side view of one hinge element comprising castellation elements, and cross-sectional views of two neighboring hinge elements in engagement according to one embodiment of the invention;
- Figure 7a and 7b: is a perspective view of a hinge element, and a perspective view of a thumb screw according to another embodiment not covered by the invention, but being helpful in understanding the same; and
- Figure 8: is a perspective view of castellation elements and/or serration elements in form of a washer not covered by the invention.

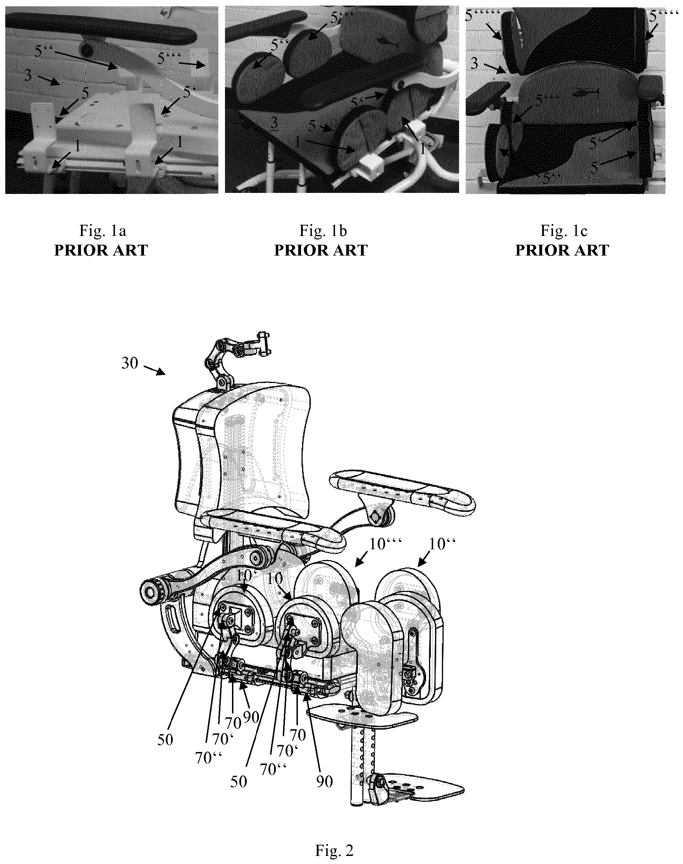

Figures 1a, 1b, 1c show a side view, a perspective view, and a front view of a postural support seat 3, having prior art side supports 1, 1', 1", 1"' mounted thereon. The figures show that the support elements 5, 5', 5 ", 5'" are fixed to bent sheet metal brackets. In the prior art example that is shown in the figures 1a, 1b, 1c, the brackets are adjustable in one axis only. The brackets could have some 'play' built into them to allow a small amount of angular adjustment which is however not intended and its degree is depending on the amount of projection out of receiving orifice. As shown in the figures 1a, 1b, 1c, the brackets are fixed in a set depth position on the seat, and mounted into slots and/or orifice to allow depth adjustment. In the shown prior art example, support elements 5, 5', 5 ", 5'" are mounted on the seat section as pelvic supports, while support elements 5"", 5""' are mounted on the back section as lateral supports. Also, it can be seen from the figures that the metal brackets stick out to the side of the postural support seat 3.

Figure 2 shows a perspective view of a postural support seat 30 having side supports 10, 10', 10", 10"' mounted thereon. The side supports 10, 10', 10", 10'" each comprise a support element 50, 50', 50", 50'" for exerting a force on a person sitting in the postural support seat 30. In the example that is shown in figure 2, four side supports 10, 10', 10", 10"', i.e. two on each side, are mounted on opposite sides of the seat section of the postural support seat 30 for pelvic support. The skilled person knows that more or less than two side supports 10 , 10' could be mounted on each side. Also, the skilled person knows that additional side supports (not shown) could be mounted on the back section of the postural support seat 30 to provide lateral support. Also, the side supports 10, 10', 10", 10''' are not limited to be used as pelvic and/or lateral support such as it is shown in figure 2. The skilled person would know that the side supports 10, 10', 10", 10''' can be also used to support thighs and knees as well as to hold up the leg in the vertical and/or horizontal plane. The side supports 10, 10', 10", 10''' could be also used as so-called "Stump-Pads" for supporting broken legs and for supporting the remainder of legs following amputation.

From figure 2 it can be also seen that three hinge elements in form of a first hinge element 70, a second hinge element 70', and a third hinge element 70" on each one of the side supports 10, 10' form a joint-link chain, where the support elements 50, 50' are attached to a first end of the joint-link-chain. Also, figure 2 shows an attachment element 90 on each one of the side supports 10, 10', where a second end of the joint-link-chain, that is opposite to the first end is connected to. The attachment element 90 can be installed in a rail section that is arranged on the side of the seat section.

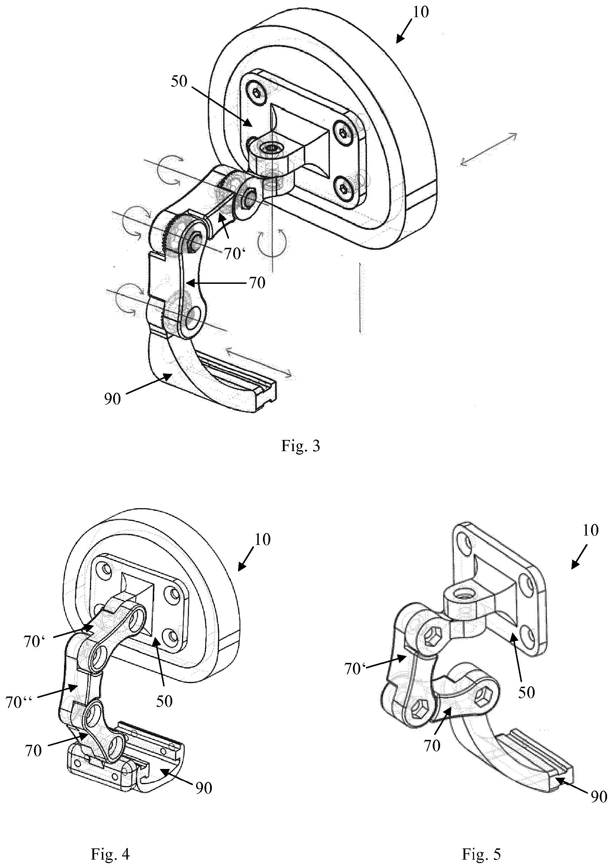

Figure 3 shows a perspective view of a side support 10 according to one embodiment of the invention. In figure 3 arrows are used to show the side supports 10 ability to rotate and/or to move around the first hinge element 70 and second hinge element 70', the attachment element 90, and/or the support element 50.

As it can be seen from the figure 3, the support element 50 comprises a connection element for attaching the support element 50 to the first end of the joint-link-chain, i.e. the second hinge element 70'. The connection element comprises a hinge coupling for rotationally attaching the support element 50 to the second hinge element 70' in the joint-link-chain. In the shown embodiment, the hinge coupling allows horizontal rotation of up to approximately 90° of the support element 50 relative to the joint-link-chain. However, the skilled person would know that an alternative coupling could be used that allows horizontal and vertical rotation, such as for example a ball joint coupling.

Also, in figure 3 it is shown that two neighboring hinge elements in form of the first hinge element 70 and the second hinge element 70' are coupled to each other to form the joint-link chain. As indicated by the arrows, the two neighboring hinge elements 70, 70' are each rotatable about an pivotal point. The attachment element 90 that is shown in figure 3 is essentially elongated and comprises two continuous grooves on opposite sides running in its longitudinal direction for installing the attachment element 90 in a rail section (not shown) that is arranged on a side of a seat section and/or back section of the postural support seat (not shown). Further attachment element 90 is connected to the first hinge element 70.

In preferred embodiments the support element 50 is at least partly formed by one hinge element, especially the second hinge element 70' and/or the attachment element is at least partly formed by one hinge element, especially the first hinge element. This reduces the number of parts and in case the support element 50 and/or the attachment element 90 comprise at least one internal joint, no loss of degree of freedom will result.

Figure 4 is a perspective view of a side support 10 according to a second embodiment of the invention. Similar to the first embodiment, as described above, the side support 10 comprise a support element 30 for exerting a force on a person sitting in the postural support seat where it is attached to (not shown). It can be seen that the side support comprises beside the first hinge element 70, and the second hinge element 70', at least one third hinge element 70" forming the joint-link chain. The number of third hinge elements 70", especially located mechanically between the first hinge element 70 and the second hinge element 70' is not restricted to a single third hinge element. A plurality of third hinge elements 70" connected mechanically in series can be used to increase the degree of freedom. Also, figure 4 shows an attachment element 90. In contrast to the attachment element that is shown in the previous figure 3, the attachment element 90 comprises a bracket with two continuous protrusions on opposite sides running in its longitudinal direction for installing the attachment element 90 in a rail section that could be arranged on the side of the seat section and/or back section of the postural support seat (not shown). Figure 5 is a perspective view of another side support 10 according to the first embodiment of the invention. As already described above, in regard to figure 3, the attachment element 90 is essentially elongated, and comprises two continuous grooves on opposite sides running in its longitudinal direction.

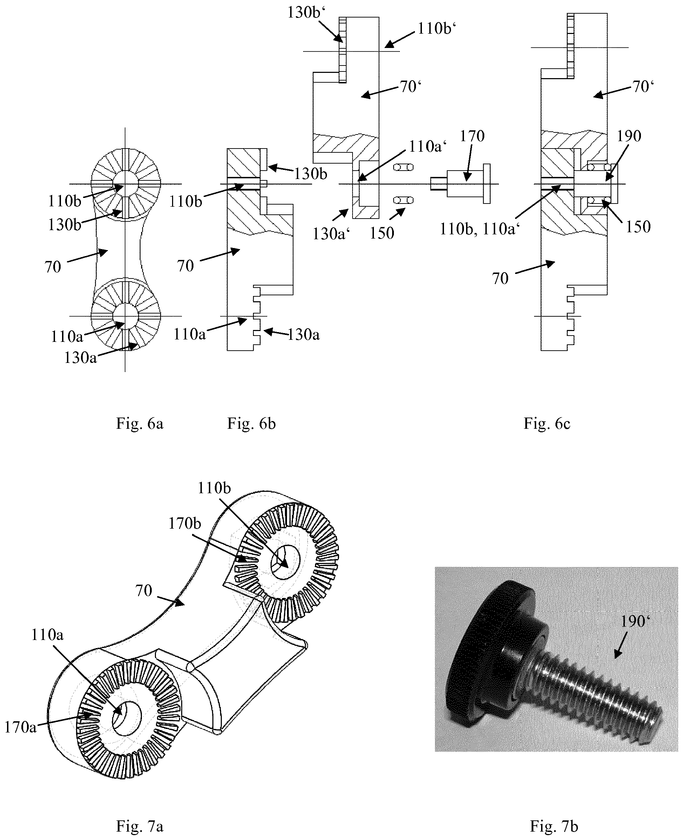

Figures 6a, 6b, 6c show a side view of one hinge element 70 comprising castellation elements 130a, 130b, and cross-sectional views of two neighboring hinge elements, namely first hinge element 70 and second hinge element 70' in engagement according to one embodiment of the invention.

In figure 6a the first hinge element 70 is shown, having castellation elements 130a, 130b arranged around each through-hole 110a, 110b. The skilled person would know that the term "castellation element" can be used to refer to a plurality of longitudinal bars that are diametrically arranged around each trough-hole 110a, 110b. Figure 6b shows a side view of the first hinge element 70 that is shown in figure 6a together with a second hinge element 70', preferably being essentially identical to the first hinge element 70 that is shown in figure 6a but being rotated around 180 degrees. From figure 6b it can be seen that castellation elements 130b, 130a' are located around each through hole 110b, 110a' of the hinge elements 70, 70', where the two neighboring hinge elements 70, 70' are contacting each other. The two castellation elements 130b, 130a' interact with each other when the assembly is fully mounted. Also, figure 6b shows a locking pin 190 that is mounted biased by spring means 150 and is made long enough to extend through the through holes 110b, 110a'.

In figure 6c, the two hinge elements 70, 70' of figure 6b are shown being held together by the locking pin 190. By pulling the two neighboring hinge elements 70, 70' away from each other, i.e. against the force of the spring means 150, the engagement between the two neighboring hinge elements 70, 70' can be disengaged, and the position of the hinge elements 70, 70' can be re-adjusted without having to use tools.

Figures 7a and 7b show a first hinge element 70, and a thumb screw 190', respectively according to another embodiment of the invention. The first hinge element 70 that is shown in figure 7a has serration elements 170a, 170b arranged around each through-hole 110a, 110b. The skilled person would know that the term "serration element" can be used to refer to a plurality of longitudinal gear teeth like elements that are diametrically arranged around each through-hole 110a, 110b. In case a second hinge element (not shown) is combined with the first hinge element 70, i.e. when the serration elements 170a, 170b of the joint surfaces are combined, a 'non-slip' engagement of the two hinge elements can be achieved with a very low fastener torque.

For fastening two hinge elements of the kind of hinge elements 70 as shown in figure 7a, a spring biased locking pin as described before for the embodiment in fig. 6c can be used. Alternatively or additionally a locking pin 190' in the form of a thumb screw, not covered by the claims but being helpful in understanding the claimed subject matter, can be used so that tools are not required for inserting and fastening the locking pin 190'. Preferably only one of the through holes 110a and 110b comprises an (internal) thread corresponding with the thread of locking pin 190' whereas the other though-hole has a diameter extending the diameter of the thread of locking pin 190'. When aligning a through-hole having a thread of a hinge element and a through-hole, having no thread of another hinge element so that the another hinge element is located between the head of the locking pin 190' and the though-hole having a thread the another hinge element is trapped.

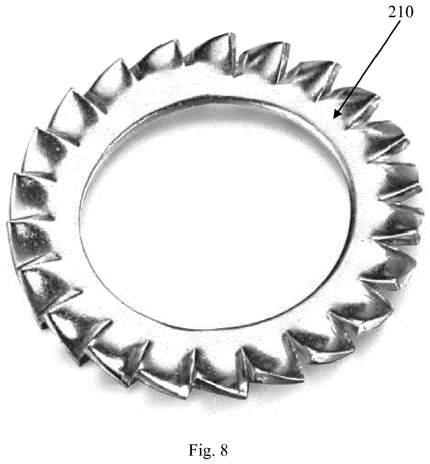

Alternative castellation elements as well as serration elements, not covered by the claimed subject matter, can be realized by washers such as the washer 210 that is shown in figure 8.

The features disclosed in this specification, the claims and the figures maybe important for the claimed invention, taken separately or in any combination, for the respective different embodiments.

### Reference sign list

- 1,1': side support
- 3: postural support seat
- 5, 5', 5", 5''', 5'''', 5''''': support element
- 10, 10', 10", 10''': side support
- 30: postural support seat
- 50, 50', 50", 50''': support element
- 70, 70', 70": hinge element
- 90: attachment element
- 110a, 110a', 110b, 110b': through hole
- 130a, 130a', 130b, 130b': castellation element
- 150: spring means
- 170a, 170a', 170b, 170b': serration element
- 190, 190': locking pin
- 210: washer

## Claims

1. A side support (10) for a postural support seat (30), comprising:
at least one support element (50) for exerting a force on a user sitting in the postural support seat (30);
at least a first hinge element (70) and at least a second hinge element (70') forming a joint-link chain, wherein the support element (50) is attached to a first end of the joint-link-chain; and
at least one attachment element (90), wherein a second end of the joint-link-chain, being opposite to the first end is connected to the attachment element (90), and wherein the attachment element (90) is adapted to be connected to the postural support seat (30) **characterized in that**
the first hinge element (70) and/or the second hinge element (70') comprises at least one castellation element (130a, 130b) and/or at least one serration element (170a, 170b) being arranged around at least one through hole (110a, 110b) at a location where two neighboring first and/or second hinge elements (70, 70') are contacting each other, wherein the castellation element (130b) and/or the serration element (170b) of the first or second hinge element (70, 70') is adapted to interact with a castellation element (130a') and/or serration element (170a') of the neighboring first and/or second hinge element (70, 70'), and wherein a locking pin (190) for coupling two neighboring first and/or second hinge elements (70, 70') to each other for forming the joint-link chain is inserted in the through hole and is kept biased by spring means (150) for keeping the castellation elements (130b, 130a') and/or serration elements (170b, (170a') in engagement.

2. The side support (10) according to claim 1, **characterized in that**
the second hinge element (70') is connected to the support element (50) and/or the first hinge element (70) is connected to the attachment element (90), the first hinge element (70) and/or the second hinge element (70') comprise(s) an essentially elongated shape, and/or comprise(s) at least two attachment points at opposite ends and/or the support element (50) is at least partly formed and/or comprised by the second hinge element (70') and/or the attachment element (90) is at least partly formed and/or comprised by the first hinge element (70).

3. The side support (10) according to claim 2, **characterized in that**
the attachment points comprise the through hole (110a, 110b), and/or the two neighboring first and/or second hinge elements (70, 70') are being at least in part rotational about the locking pin (190, 190').

4. The side support (10) according to claim 3, **characterized in that**
the through holes (110a, 110b) are located in respective recesses in the surface of the first hinge element (70) and/or second hinge element (70'), especially so that two neighboring first and/or second hinge elements (70, 70') are aligned with each other, preferably wherein the recesses are located on the same side of the first and/or second hinge elements (70, 70'), or on opposite sides of the first and/or second hinge elements (70, 70').

5. The side support (10) according to one of the preceding claims, **characterized in that**
the castellation element and/or serration element is/are arranged around each through hole (110a, 110b), such that the two neighboring first and/or second hinge elements (70, 70') are adapted such that pulling the two neighboring first and/or second hinge elements (70, 70') away from each other disengages the engagement between the hinge elements (70, 70').

6. The side support (10) according to one of the preceding claims, **characterized in that**
the support element (50) comprises at least one connection element for attaching the support element (50) to the first end of the joint-link-chain, especially the second hinge element (70'), wherein preferably the connection element comprises a hinge coupling for rotationally attaching the support element (50) to the second hinge element (70') in the joint-link-chain, wherein especially the hinge coupling is adapted to allow vertical and/or horizontal rotation of the support element (50) relative to the j oint-link-chain.

7. The side support (10) according to one of the preceding claims, **characterized in that**
the attachment element (90) is essentially elongated, especially comprises at least one continuous groove running in its longitudinal direction, preferably the attachment element (90) comprises two continuous grooves on opposite sides of the attachment element (90), for installing the attachment element (90) in a rail section that is arranged on a side of a seat section and/or back section of the postural support seat (30), preferably the attachment element (90) is adapted to be slidably installed in the rail section.

8. The side support (10) according to one of the claims 1 to 6, **characterized in that**
the attachment element (90) is essentially elongated, especially comprises at least one bracket with at least one continuous protrusion running in its longitudinal direction, preferably the attachment element (90) comprises two continuous protrusions on opposite sides of the attachment element (90), for installing the attachment element (90) in the rail section that is arranged on the side of the seat section and/or back section of the postural support seat (30), preferably the attachment element (90) is adapted to be slidably installed in the rail section.

9. The side support (10) according to one of the preceding claims, **characterized in that**
the support element (50) comprises at least one pad for contacting the user's body.

10. The side support (10) according to one of the preceding claims, **characterized in that**
the joint-link chain is comprised of at least a third hinge element (70") located between two first and/or second hinge elements (70, 70'), preferably a plurality of third hinge elements (70").

11. The side support (10) according to one of the preceding claims, **characterized in that**
the first hinge element, the second hinge element and/or the third hinge element (70, 70', 70") comprise(s) at least partly at least one plastic material, and/or at least one cast aluminum material.

12. A postural support seat (30), comprising
at least one rail section arranged along the seat section and/or the back section, and at least one side support (10) according to any of claims 1 to 11, wherein especially the side support (10) is installed in the rail section.

13. The postural support seat (30) of claim 12, **characterized in that**
first and second rail sections are arranged along the side of the seat section, wherein preferably at least two side supports (10, 10', 10", 10"') are installed as pelvic supports in each of the first and second rail sections; and/or
third and fourth rail sections are arranged along the side of the back section, wherein especially at least one side support is installed as lateral support in each of the third and fourth rail sections.

## Patentansprüche

1. Eine Seitenstütze (10) für einen haltungsuntersützenden Sitz (30), umfassend:
mindestens ein Stützelement (50) zum Ausüben einer Kraft auf einen Benutzer, der in dem haltungsuntersützenden Sitz (30) sitzt;
mindestens ein erstes Gelenkelement (70) und mindestens ein zweites Gelenkelement (70'), die eine Gelenkgliederkette bilden, wobei das Stützelement (50) an einem ersten Ende der Gelenkgliederkette befestigt ist; und
mindestens ein Befestigungselement (90), wobei ein zweites Ende der Gelenkgliederkette, das dem ersten Ende gegenüberliegt, mit dem Befestigungselement (90) verbunden ist, und wobei das Befestigungselement (90) dazu ausgelegt ist, mit dem Sitz zur Haltungsunterstützung (30) verbunden zu sein, **dadurch gekennzeichnet, dass**
das erste Gelenkelement (70) und/oder das zweite Gelenkelement (70') mindestens ein Zinnenelement (130a, 130b) und/oder mindestens ein Verzahnungselement (170a, 170b) umfassen bzw. umfasst, die bzw. das um mindestens eine Durchgangsbohrung (110a, 110b) an einer Stelle angeordnet sind bzw. ist, an der zwei benachbarte erste und/oder zweite Gelenkelemente (70, 70') einander berühren, wobei das Zinnenelement (130b) und/oder das Verzahnungselement (170b) des ersten oder zweiten Gelenkelements (70, 70') dazu ausgelegt sind bzw. ist, mit einem Zinnenelement (130a') und/oder Verzahnungselement (170a') des benachbarten ersten und/oder zweiten Gelenkelements (70, 70') zusammenzuwirken, und wobei ein Verriegelungsstift (190) zum Koppeln von zwei benachbarten ersten und/oder zweiten Gelenkelementen (70, 70') miteinander zur Bildung der Gelenkgliederkette in die Durchgangsbohrung eingesetzt ist und von Federmitteln (150) vorgespannt gehalten wird, um die Zinnenelemente (130b, 130a') und/oder Verzahnungselemente (170b, 170a') in Eingriff zu halten.

2. Die Seitenstütze (10) nach Anspruch 1, **dadurch gekennzeichnet, dass**
das zweite Gelenkelement (70') mit dem Stützelement (50) verbunden ist und/oder das erste Gelenkelement (70) mit dem Befestigungselement (90) verbunden ist, wobei das erste Gelenkelement (70) und/oder das zweite Gelenkelement (70') eine im Wesentlichen längliche Form umfassen bzw. umfasst, und/oder mindestens zwei Befestigungspunkte an gegenüberliegenden Enden umfassen bzw. umfasst und/oder das Stützelement (50) zumindest teilweise von dem zweiten Gelenkelement (70') gebildet und/oder umfasst ist und/oder das Befestigungselement (90) zumindest teilweise von dem ersten Gelenkelement (70) gebildet und/oder umfasst ist.

3. Die Seitenstütze (10) nach Anspruch 2, **dadurch gekennzeichnet, dass**
die Befestigungspunkte die Durchgangsbohrung (110a, 110b) umfassen und/oder die zwei benachbarten ersten und/oder zweiten Gelenkelemente (70, 70') zumindest teilweise um den Verriegelungsstift (190, 190') drehbar sind.

4. Die Seitenstütze (10) nach Anspruch 3, **dadurch gekennzeichnet, dass**
die Durchgangsbohrungen (110a, 110b) in jeweiligen Vertiefungen in der Oberfläche des ersten Gelenkelements (70) und/oder des zweiten Gelenkelements (70') angeordnet sind, insbesondere derart, dass zwei benachbarte erste und/oder zweite Gelenkelemente (70, 70') miteinander ausgerichtet sind, wobei vorzugsweise die Vertiefungen auf derselben Seite der ersten und/oder zweiten Gelenkelemente (70, 70') oder auf gegenüberliegenden Seiten der ersten und/oder zweiten Gelenkelemente (70, 70') angeordnet sind.

5. Die Seitenstütze (10) nach einem der vorangehenden Ansprüche, **dadurch gekennzeichnet, dass**
das Zinnenelement und/oder das Verzahnungselement derart um jede Durchgangsbohrung (110a, 110b) angeordnet ist bzw. sind, dass die zwei benachbarten ersten und/oder zweiten Gelenkelemente (70, 70') derart ausgelegt sind, dass ein Voneinanderwegziehen der zwei benachbarten ersten und/oder zweiten Gelenkelemente (70, 70') den Eingriff zwischen den Gelenkelementen (70, 70') löst.

6. Die Seitenstütze (10) nach einem der vorangehenden Ansprüche, **dadurch gekennzeichnet, dass**
das Stützelement (50) mindestens ein Verbindungselement zum Befestigen des Stützelements (50) an dem ersten Ende der Gelenkgliederkette, insbesondere dem zweiten Gelenkelement (70'), umfasst, wobei das Verbindungselement vorzugsweise eine Gelenkkopplung zum drehbaren Befestigen des Stützelements (50) an dem zweiten Gelenkelement (70') in der Gelenkgliederkette umfasst, wobei die Gelenkkopplung insbesondere dazu ausgelegt ist, eine vertikale und/oder horizontale Drehung des Stützelements (50) relativ zu der Gelenkgliederkette zu ermöglichen.

7. Die Seitenstütze (10) nach einem der vorangehenden Ansprüche, **dadurch gekennzeichnet, dass**
das Befestigungselement (90) im Wesentlichen länglich ist, insbesondere mindestens eine durchgehende Nut umfasst, die in seiner Längsrichtung verläuft, wobei vorzugsweise das Befestigungselement (90) auf gegenüberliegenden Seiten des Befestigungselements (90) zwei durchgehende Nuten umfasst zum Installieren des Befestigungselements (90) in einem Schienenprofil, das auf einer Seite eines Sitzabschnitts und/oder Rückenabschnitts des Sitzes zur Haltungsunterstützung (30) angeordnet ist, wobei das Befestigungselement (90) vorzugsweise dazu ausgelegt ist, verschiebbar in dem Schienenprofil installiert zu sein.

8. Die Seitenstütze (10) nach einem der Ansprüche 1 bis 6, **dadurch gekennzeichnet, dass**
das Befestigungselement (90) im Wesentlichen länglich ist, insbesondere mindestens eine Halterung mit mindestens einem durchgehenden Vorsprung umfasst, der in ihrer Längsrichtung verläuft, wobei vorzugsweise das Befestigungselement (90) auf gegenüberliegenden Seiten des Befestigungselements (90) zwei durchgehende Vorsprünge umfasst zum Installieren des Befestigungselements (90) in dem Schienenprofil, das auf der Seite des Sitzabschnitts und/oder Rückenabschnitts des Sitzes zur Haltungsunterstützung (30) angeordnet ist, wobei das Befestigungselement (90) vorzugsweise dazu ausgelegt ist, verschiebbar in dem Schienenprofil installiert zu sein.

9. Die Seitenstütze (10) nach einem der vorangehenden Ansprüche, **dadurch gekennzeichnet, dass**
das Stützelement (50) mindestens ein Kissen für den Kontakt mit dem Körper des Benutzers umfasst.

10. Die Seitenstütze (10) nach einem der vorangehenden Ansprüche, **dadurch gekennzeichnet, dass**
die Gelenkgliederkette mindestens ein drittes Gelenkelement (70"), das zwischen zwei ersten und/oder zweiten Gelenkelementen (70, 70') angeordnet ist, vorzugsweise eine Mehrzahl von dritten Gelenkelementen (70"), umfasst.

11. Die Seitenstütze (10) nach einem der vorangehenden Ansprüche, **dadurch gekennzeichnet, dass**
das erste Gelenkelement, das zweite Gelenkelement und/oder das dritte Gelenkelement (70, 70', 70") zumindest teilweise mindestens ein Kunststoffmaterial und/oder mindestens ein Aluminiumgussmaterial umfassen bzw. umfasst.

12. Der Sitz zur Haltungsunterstützung (30), umfassend
mindestens ein Schienenprofil, das entlang des Sitzabschnitts und/oder des Rückenabschnitts angeordnet ist, und
mindestens eine Seitenstütze (10) nach einem der Ansprüche 1 bis 11, wobei insbesondere die Seitenstütze (10) in dem Schienenprofil installiert ist.

13. Der Sitz zur Haltungsunterstützung (30) nach Anspruch 12, **dadurch gekennzeichnet, dass**
ein erstes und ein zweites Schienenprofil entlang der Seite des Sitzabschnitts angeordnet sind, wobei vorzugsweise mindestens zwei Seitenstützen (10, 10', 10", 10"') als Beckenstütze in jedem des ersten und des zweiten Schienenprofils installiert sind; und/oder
ein drittes und ein viertes Schienenprofil entlang der Seite des Rückenabschnitts angeordnet sind, wobei insbesondere mindestens eine Seitenstütze als seitliche Stütze in jedem des dritten und des vierten Schienenprofils installiert ist.

## Revendications

1. Un support latéral (10) pour un siège de soutien postural (30) comprend :
au moins un élément de support (50) destiné à appliquer une force sur un utilisateur assis dans le siège de soutien postural (30) ;
au moins un premier élément de charnière (70) et au moins un deuxième élément de charnière (70') formant une chaîne à liaison articulée, où l'élément de support (50) est fixé à une première extrémité de la chaîne à liaison articulée ; et
au moins un élément de fixation (90),où une deuxième extrémité de la chaîne à liaison articulée opposée à la première extrémité est raccordée à l'élément de fixation (90), et l'élément de fixation (90) est adapté pour être relié au siège de soutien postural (30),
**caractérisé en ce que**
le premier élément de charnière (70) et/ou le deuxième élément de charnière (70') comprend/comprennent au moins un élément en créneau (130a, 130b) et/ou au moins un élément à denture (170a, 170b) disposé(s) autour d'au moins un trou traversant (110a, 110b) à un emplacement où deux premiers et/ou deuxièmes éléments de charnière (70, 70') adjacents sont au contact l'un de l'autre, l'élément en créneau (130b) et/ou l'élément à denture (170b) du premier ou du deuxième élément de charnière (70, 70') est adapté/sont adaptés pour coopérer avec un élément en créneau (130a') et/ou un élément à denture (170a') du premier et/ou du deuxième élément de charnière (70, 70') adjacent, et une goupille de verrouillage (190) pour l'accouplement de deux premiers et/ou deuxièmes éléments de charnière (70, 70') adjacents afin de former la chaîne à liaison articulée est introduite dans le trou traversant et est contrainte au moyen d'un ressort (150) pour maintenir en état de prise les éléments en créneau (130b, 130a') et/ou les éléments à denture (170b, (170a').

2. Le support latéral (10) selon la revendication 1, **caractérisé en ce que**
le deuxième élément de charnière (70') est relié à l'élément de support (50) et/ou le premier élément de charnière (70) est relié à l'élément de fixation (90), le premier élément de charnière (70) et/ou le deuxième élément de charnière (70') comprennent une forme sensiblement oblongue, et/ou comprennent au moins deux points de fixation à des extrémités opposées et/ou l'élément de support (50) est au moins partiellement constitué du deuxième élément de charnière (70') et/ou compris dans celui-ci et/ou l'élément de fixation (90) est au moins partiellement constitué du premier élément de charnière (70) et/ou compris dans celui-ci.

3. Le support latéral (10) selon la revendication 2, **caractérisé en ce que**
les points de fixation comprennent le trou traversant (110a, 110b), et/ou les deux premiers et/ou deuxièmes éléments de charnière (70, 70') adjacents sont au moins partiellement rotatifs autour de la goupille de verrouillage (190, 190').

4. Le support latéral (10) selon la revendication 3, **caractérisé en ce que**
les trous traversants (110a, 110b) sont ménagés dans des approfondissement respectifs à la surface du premier élément de charnière (70) et/ou du deuxième élément de charnière (70'), en particulier de telle manière que deux premiers et/ou deuxièmes éléments de charnière (70, 70') adjacents sont alignés entre eux, les approfondissement sont préférentiellement situés sur le même côté du premier et/ou du deuxième éléments de charnière (70, 70'), ou sur des côtés opposés du premier et/ou du deuxième éléments de charnière (70, 70').

5. Le support latéral (10) selon l'une quelconque des revendications précédentes, **caractérisé en ce que**
l'élément en créneau et/ou l'élément à denture est/sont disposé(s) autour de chaque trou traversant (110a, 110b), de telle manière que les deux premiers et/ou deuxièmes éléments de charnière (70, 70') adjacents soient adaptés de telle manière que le fait d'écarter les deux premiers et/ou deuxièmes éléments de charnière (70, 70') adjacents désengage l'engagement entre les éléments de charnière (70, 70').

6. Le support latéral (10) selon l'une quelconque des revendications précédentes, **caractérisé en ce que**
l'élément de support (50) comprend au moins un élément de connexion pour fixer l'élément de support (50) à la première extrémité de la chaîne à liaison articulée, en particulier au deuxième élément de charnière (70'), ledit élément de connexion comprend préférentiellement un couplage charnière pour fixer de manière rotative l'élément de support (50) au deuxième élément de charnière (70') dans la chaîne à liaison articulée, ledit couplage charnièreest en particulier adapté pour permettre une rotation verticale et/ou horizontale de l'élément de support (50) par rapport à la chaîne à liaison articulée.

7. Le support latéral (10) selon l'une quelconque des revendications précédentes, **caractérisé en ce que**
l'élément de fixation (90) est sensiblement étiré, comprend en particulier au moins une rainure continue s'étendant dans le sens de sa longueur, l'élément de fixation (90) comprend préférentiellement deux rainures continues sur des côtés opposés de l'élément de fixation (90) pour monter l'élément de fixation (90) dans une section de rail ménagée sur un côté d'une section d'assise et/ou d'une section de dossier du siège de soutien postural (30), l'élément de fixation (90) est préférentiellement adapté pour être monté de manière coulissante dans la section de rail.

8. Le support latéral (10) selon l'une quelconque des revendications 1 à 6, **caractérisé en ce que**
l'élément de fixation (90) est sensiblement étiré, comprend en particulier au moins un support avec au moins une saillie s'étendant de manière continuée dans le sens de sa longueur, l'élément de fixation (90) comprenant préférentiellement deux saillies continues sur des côtés opposés de l'élément de fixation (90) pour le montage de l'élément de fixation (90) dans la section de rail ménagée sur le côté de la section d'assise et/ou de la section de dossier du siège de soutien postural (30), l'élément de fixation (90) est préférentiellement adapté pour être monté de manière coulissante dans la section de rail.

9. Le support latéral (10) selon l'une quelconque des revendications précédentes, **caractérisé en ce que**
l'élément de support (50) comprend au moins un tampon pour contacter le corps de l'utilisateur.

10. Le support latéral (10) selon l'une quelconque des revendications précédentes, **caractérisé en ce que**
la chaîne à liaison articulée est constituée d'au moins un troisième élément de charnière (70") disposé entre deux premiers et/ou deuxièmes éléments de charnière (70, 70'), préférentiellement d'une pluralité de troisièmes éléments de charnière (70").

11. Le support latéral (10) selon l'une quelconque des revendications précédentes, **caractérisé en ce que**
le premier élément de charnière, le deuxième élément de charnière et/ou le troisième élément de charnière (70, 70', 70") comprend/comprennent au moins partiellement au moins un matériau plastique et/ou au moins de l'aluminium coulé.

12. Un siège de soutien postural (30) comprend
au moins une section de rail ménagée le long de la section d'assise et/ou de la section de dossier, et
au moins un support latéral (10) selon l'une quelconque des revendications 1 à 11, ledit support latéral est en particulier (10) monté dans la section de rail.

13. Le siège de soutien postural (30) selon la revendication 12, **caractérisé en ce que** une première et une deuxième section de rail sont disposées le long du côté de la section d'assise, où au moins deux supports latéraux (10, 10', 10", 10"') est préférentiellement montés comme supports pelviens dans la première ainsi que dans la deuxième section de rail ; et/ou une troisième et une quatrième section de rail sont disposées le long du côté de la section de dossier, où au moins un support latéral est en particulier monté comme support latéral dans la troisième ainsi que la quatrième section de rail.
